# EUROPEAN PATENT APPLICATION

(11) **EP 3 594 302 A1**
(43) Date of publication of application: **15.01.2020**
(21) Application number: 18744362.7
(22) Date of filing: 30.01.2018
(51) Int. Cl.: C09J 7/20, B32B 3/16, B32B 27/00, B32B 27/42, C09J 201/00, F16F 7/00

(54) **IMPACT ABSORPTION MATERIAL, CORROSION PREVENTION MATERIAL, THERMAL INSULATION MATERIAL, AND MANUFACTURING METHOD FOR IMPACT ABSORPTION MATERIAL**

(30) Priority: 30.01.2017 JP 2017014869
(71) Applicant: Takemoto, Naofumi, Tokyo 105-0011 (JP)
(72) Inventor: Takemoto, Naofumi, Tokyo 105-0011 (JP)
(74) Representative: Maiwald Patent- und Rechtsanwaltsgesellschaft mbH
(86) International application number: PCT/JP2018/003051
(87) International publication number: WO 2018/139676

(57) **Abstract**

A shock absorber is provided, that includes an adhesive tape portion, a base material stacked on the adhesive tape portion, and a polyurea resin layer stacked on the base material, wherein the polyurea resin layer is divided into a plurality of regions by a cut. A corrosion prevention material and a heat insulating material also include the same adhesive tape portion, the same base material, and the same polyurea resin layer.

## Description

### BACKGROUND

### 1. TECHNICAL FIELD

The present invention relates to a shock absorber, a corrosion prevention material, and a heat insulating material.

### 2. RELATED ART

Conventionally, it is known to use a polyurea resin molding for automobile parts such as bumpers, fenders and side moldings for the purpose of weight reduction or durability improvement of the automobile (see, for example, Patent Document 1). However, since the polyurea resin is hard, it is difficult to cut the polyurea resin molding according to the object for use. Therefore, it has been difficult to use the polyurea resin molding easily as the shock absorber, the corrosion prevention material, or the heat insulating material.

### Patent Document

[Patent Document 1] Japanese Patent Application Publication No. 07-090174

It is desirable that the shock absorber including the polyurea resin, the corrosion prevention material, and the heat insulating material are easily cut into a proper size according to the object.

### SUMMARY

In a first aspect of the present invention, a shock absorber is provided. The shock absorber may include the adhesive tape portion. The shock absorber may include a base material. The base material may be stacked on the adhesive tape portion. The shock absorber may include the polyurea resin layer and the polyurea resin layer may be stacked on the base material. The polyurea resin layer may be divided into a plurality of regions by a cut.

The polyurea resin layer and the base material may be divided into a plurality of regions by a cut.

The shock absorber may include the protective film. The protective film may be attached to an adhesive surface of the adhesive tape portion. The shock absorber may be wound in a roll.

The base material may include one or more types of base materials selected from a group consisting of a foamed synthetic resin, a carbon fiber, a poriadomido synthetic fiber, a silicate fiber, a basalt fiber, an inorganic substance powder highly-oriented thin film sheet, and a cellulose nanofibers.

The base material may include the first base material. The first base material may be formed from the foamed synthetic resin. The base material may include the second base material. The second base material may be stacked on the first base material. The second base material may include one or more types of base material selected from a group consisting of a carbon fiber, a poriadomido synthetic fiber, a silicate fiber, a basalt fiber, an inorganic substance powder highly-oriented thin film sheet, and a cellulose nanofibers.

In a second aspect of the present invention, a corrosion prevention material is provided. The corrosion prevention material may include the adhesive tape portion. The corrosion prevention material may include the base material. The base material may be stacked on the adhesive tape portion. The corrosion prevention material may include the polyurea resin layer and the polyurea resin layer may be stacked on the base material. The polyurea resin layer may be divided into a plurality of regions by a cut.

In a third aspect of the present invention, a heat insulating material is provided. The heat insulating material may include the adhesive tape portion. The heat insulating material may include the base material. The base material may be stacked on the adhesive tape portion. The heat insulating material may include the polyurea resin layer. The polyurea resin layer may be stacked on the base material. The polyurea resin layer may be divided into a plurality of regions by a cut.

In a fourth aspect of the present invention, a method of manufacturing the shock absorber that is attached to the object is provided. The shock absorber may include the adhesive tape portion. The shock absorber may include the base material. The base material may be stacked on the adhesive tape portion. The shock absorber may include the polyurea resin layer. The polyurea resin layer may be stacked on the base material. The polyurea resin layer may be divided into a plurality of regions by a cut. The method of manufacturing the shock absorber may include inputting information on a moving speed of the object in a situation where the object to which the shock absorber is attached is used. The method of manufacturing may include controlling a spray amount of a polyurea resin to a surface of the base material based on input information such that a thickness of the polyurea resin layer stacked on the base material increases as the moving speed of the object increases. The method of manufacturing may further include forming such that a width and a thickness of the cut increase as the thickness of the polyurea resin layer increases.

### BRIEF DESCRIPTION OF THE DRAWINGS

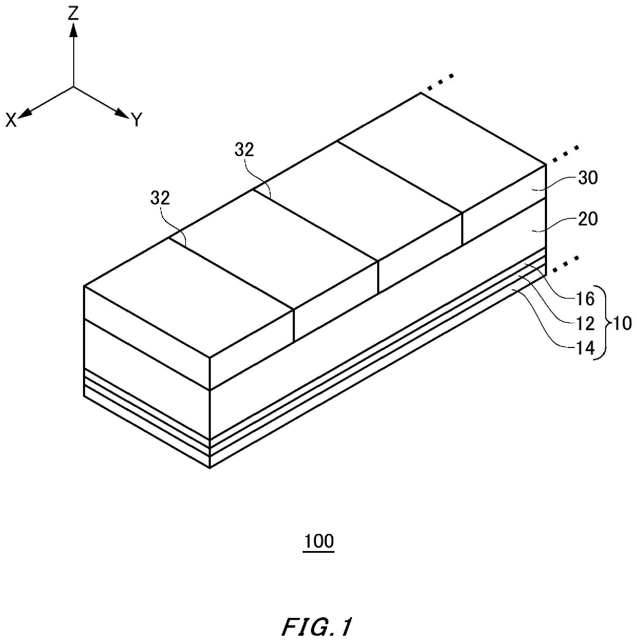

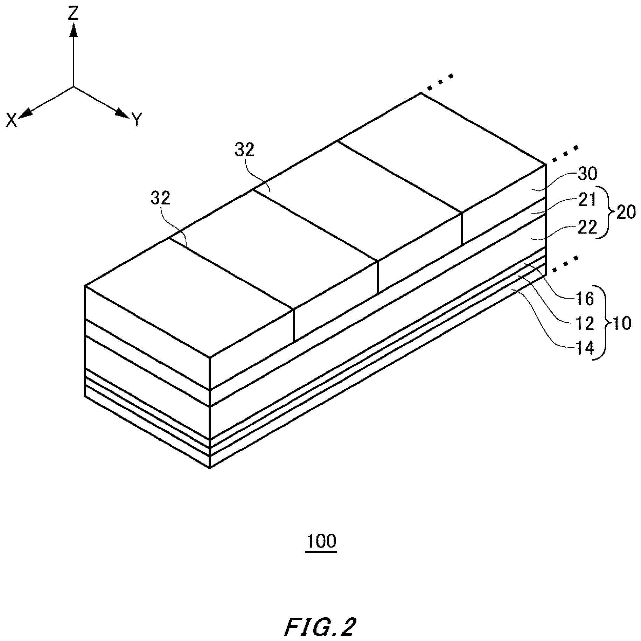

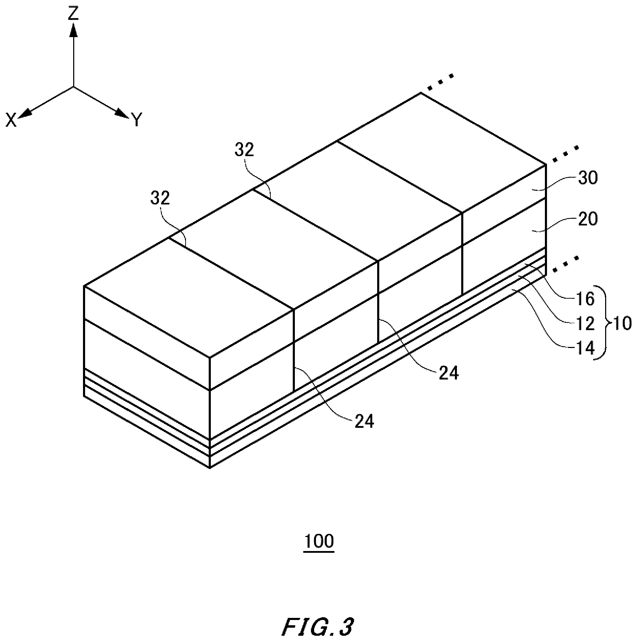

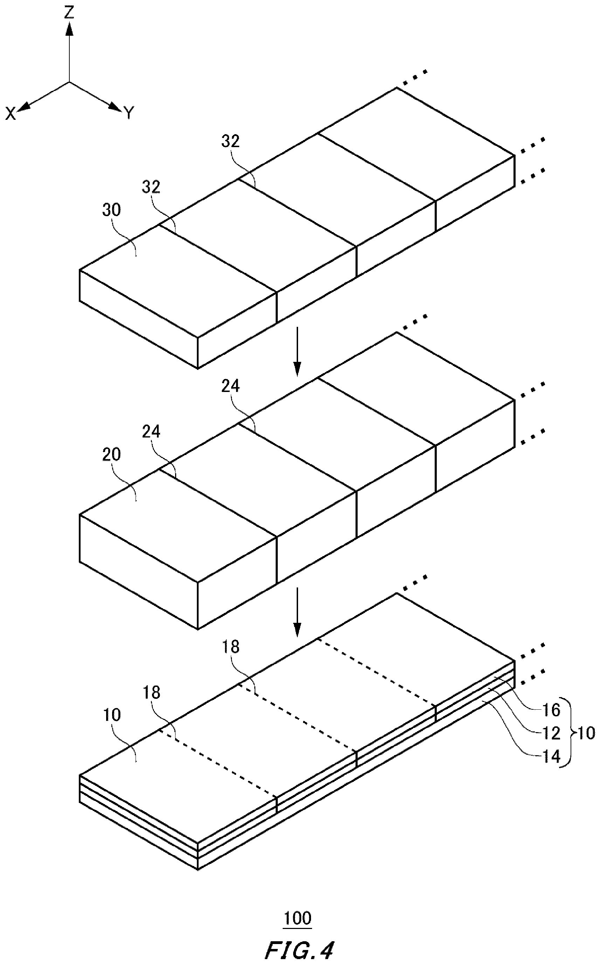

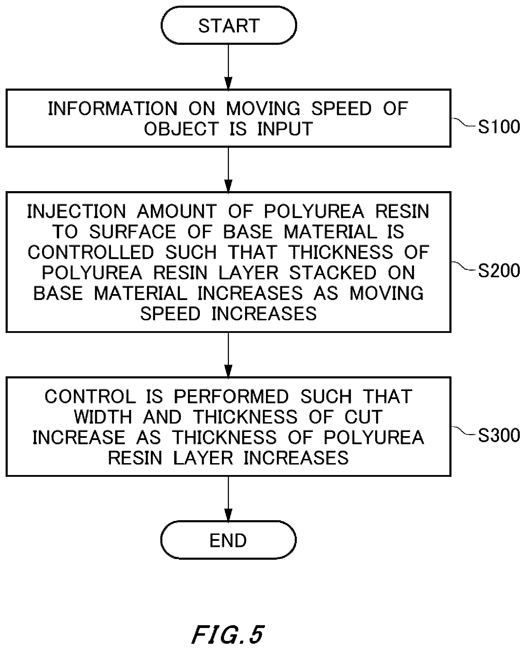

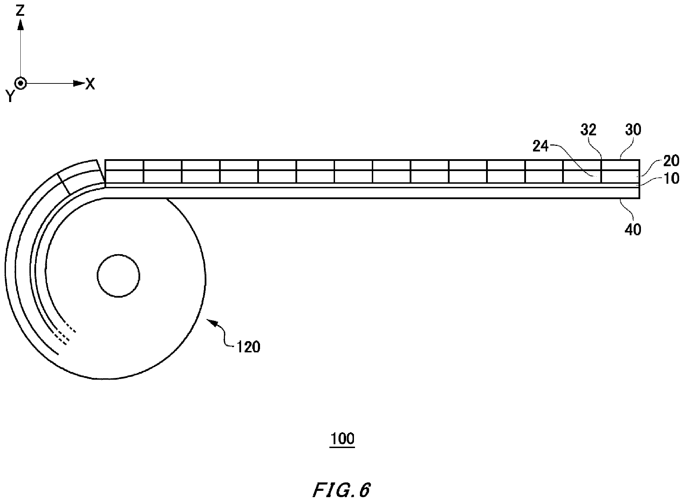

Fig. 1 illustrates one example of a shock absorber 100 according to a first embodiment of the present invention. Fig. 2 illustrates another example of the shock absorber 100. Fig. 3 illustrates one example of a shock absorber 100 according to a second embodiment of the present invention. Fig. 4 is an exploded perspective view of the shock absorber 100. Fig. 5 illustrates one example of a method of manufacturing the shock absorber 100. Fig. 6 illustrates one example of the shock absorber 100 in the rolled state.

### DESCRIPTION OF EXEMPLARY EMBODIMENTS

Hereinafter, the present invention will be described through the embodiments of the invention, but the following embodiments do not limit the invention according to the claims. Moreover, not all combinations of features described in the embodiments are essential to the solution of the invention.

Fig. 1 illustrates one example of the shock absorber 100 according to the first embodiment of the present invention. The shock absorber 100 is cut into a proper size according to an object and attached to a surface of the object whose impact resistance is to be increased. For example, the shock absorber 100 is attached to a surface of a mobile device. The mobile device includes various devices such as a vehicle, an in-hospital mobility support system, an electric cart for elderly people, and a caddie cart.

The in-hospital mobility support system is a self-propelled car that is used for a patient to board and move in a hospital. The in-hospital mobility support system automatically carries the patient to a destination, for example, at a speed of about 1.2 km per hour or more and 1.8 km per hour or less. The electric cart for elderly people is a type of an electric wheelchair and is widely used as an auxiliary tool that moves at about 6 km per hour. The caddie cart travels at a medium speed of 30 km per hour or less and is used as means of transportation in a golf course.

Further, the shock absorber 100 may be attached to an inner surface or an outer surface of a box such as a container. The shock absorber 100 may be attached to a bottom surface or a front surface of footwear such as slippers. The shock absorber 100 may be attached to a surface of a wearable article such as a helmet. However, the object to which the shock absorber 100 is attached is not limited to the mobile device, the box, the footwear, and the wearable article.

The shock absorber 100 includes an adhesive tape portion 10, a base material 20, and a polyurea resin layer 30. The adhesive tape portion 10 includes a tape body 12, a first adhesive layer 14, and a second adhesive layer 16. The first adhesive layer 14 is an adhesive layer applied to a surface of the tape body 12 and provides an adhesive surface for attaching the shock absorber 100 to the object. The second adhesive layer 16 firmly fixes the adhesive tape portion 10 and the base material 20 of the shock absorber 100. The tape body 12 may be formed of a flexible material.

The base material 20 is stacked on the adhesive tape portion 10. In the present example, the base material 20 is stacked on the top surface of the adhesive tape portion 10. Specifically, the base material 20 is firmly fixed to the adhesive tape portion 10 by the second adhesive layer 16 of the adhesive tape portion 10. The base material 20 may include one or more types of base materials selected from a group consisting of a foamed synthetic resin, a carbon fiber, a polyamide synthetic fiber, a silicate fiber, a basalt fiber, an inorganic substance powder highly-oriented thin film sheet, and a cellulose nanofibers.

When the base material 20 is the foamed synthetic resin, the synthetic resin forming the base material 20 may be a high polymer compound. As a more specific example, the synthetic resin forming the base material 20 is formed of one or more materials selected from polystyrene, polyethylene, polypropylene, and polyurethane. The foamed synthetic resin refers to the synthetic resin in which fine bubbles are dispersed. In one example, the base material 20 is formed of expanded polystyrene (foamed polystyrene).

Alternatively, the base material 20 may be fibers such as a carbon fiber, a polyamide synthetic fiber (aramid fiber), a silicate fiber (glass fiber), and a basalt fiber. Further, the base material 20 may be the inorganic substance powder highly-blended thin film sheet. The inorganic substance powder highly-blended thin film sheet is called stone paper (paper of stone) or LIMEX (registered trademark). The inorganic substance powder highly-blended thin film sheet is a sheet obtained by forming pellets made by mixing, for example, 56 wt% to 80 wt% of calcium carbonate powder, 18 wt% to 43 wt% of polyethylene resin, and 1 wt% to 2 wt% of additive into a thin film by an inflation extruder.

The base material 20 may be a sheet formed of the cellulose nanofibers. The cellulose nanofibers are the basic skeletal materials of plants. In plant cell walls, cellulose nanofibers in which several cellulose microfibrils (single cellulose nanofibers) having a width of about 4 nm are gathered and bundled exist. As the base material 20, a base material obtained by molding an aggregation of cellulose nanofibers into a sheet or a base material in which the cellulose nanofibers and a resin are mixed to form a resin complex may be used. It is possible to increase the strength of the base material 20 because the cellulose nanofibers have the strength that is five times or more than that of iron steel.

The polyurea resin layer 30 is stacked on the base material 20. The polyurea resin layer 30 is formed of the polyurea resin. The polyurea resin is a resin having a urea bond that is formed by a chemical reaction between, for example, isocyanate and an amino group. As one example, the polyurea resin is formed by reacting polyisocyanate with polyamine. In the present example, the polyurea resin layer 30 is stacked on the top surface of the base material 20. The top surface of the base material 20 means a surface opposite to a surface where the base material 20 is in contact with the adhesive tape portion 10.

The polyurea resin layer 30 of the present example is divided into a plurality of regions by a cut 32. With reference to an XYZ orthogonal coordinate system, the adhesive tape portion 10, the base material 20, and the polyurea resin layer 30 are stacked with a Z-axis direction as the stacking direction. In the present example, the cuts 32 are formed along a Y direction that is orthogonal to the Z-axis direction that is the stacking direction. In the present example, the plurality of cuts 32 are formed so as to be orthogonal to a longitudinal direction (X-axis direction) along which the shock absorber 100 extends. Each interval between adjacent cuts 32 may be the same or different.

In the shock absorber 100 of the present example, the plurality of cuts 32 are formed in advance in the polyurea resin layer 30 that is difficult to cut by a cutter or the like. Accordingly, a user can cut the shock absorber 100 through the cuts 32 using an instrument such as a cutter. By choosing cutting points among the plurality of cuts 32, the shock absorber 100 including the polyurea resin can be cut into a proper size according to the object.

The adhesive tape portion 10 is provided to the shock absorber 100 of the present example. Accordingly, it is possible to attach, to the surfaces of various objects, the shock absorber 100 cut into the proper size according to the object to enhance the impact resistance of the object. Specifically, the shock absorber 100 can be attached to surfaces of various articles such as a surface of a mobile device, a rear surface of footwear, an inner surface of a container, and a surface of a wearable article to enhance the impact resistance of these articles. A fluorescent paint or a luminous paint may be applied to the surface of the shock absorber 100. Accordingly, the shock absorber 100 can enhance not only the impact resistance, but also the visibility.

In the example illustrated in Fig. 1, the polyurea resin layer 30 is stacked on the top surface of the base material 20 and a side surface of the base material 20 is exposed. However, unlike this case, the polyurea resin layer 30 may cover also the side surface of the base material 20. The polyurea resin layer 30 enhances the strength of the shock absorber 100 by covering also the side surface of the base material 20. In this case, the cuts 32 are formed up to also in the portion of the polyurea resin layer 30 that is present to cover the side surface of the base material 20.

Note that, a structure illustrated in Fig. 1 is applicable not only to a shock absorber, but also to a corrosion prevention material or a heat insulating material. That is, the corrosion prevention material or the heat insulating material may have a configuration of having the adhesive tape portion 10, the base material 20 stacked on the adhesive tape portion 10, and the polyurea resin layer 30 stacked on the base material 20, where the polyurea resin layer 30 is divided into the plurality of regions by the cuts 32.

Fig. 2 illustrates another example of the shock absorber 100. In the shock absorber 100 of the present example, the base material 20 includes a first base material 21 and a second base material 22. The second base material 22 and the first base material 21 are stacked. The first base material 21 and the second base material 22 are formed of different materials. The first base material 21 of the present example may be the base material of the foamed synthetic resin. The second base material 22 may include one or more types of base material selected from a group consisting of a carbon fiber, a polyamide synthetic fiber, a silicate fiber, a basalt fiber, an inorganic substance powder highly-blended thin film sheet, and a cellulose nanofibers.

Particularly, the first base material 21 may be the foamed synthetic resin and the second base material may be the cellulose nanofibers. While the first base material 21 formed of the foamed synthetic resin rich in elasticity absorbs the impact, the strength can be enhanced by the cellulose nanofibers.

The base material 20 may be selected depending on properties or the like of the object to which the shock absorber 100 is attached. Depending on the properties or the like of the object to which the shock absorber 100 is attached, a thickness of the polyurea resin layer 30 may be determined or whether to apply the fluorescent coating may be determined.

Table 1 shows a list of the base material 20, the thickness of the polyurea resin layer 30, and whether to apply the fluorescent coating according to the object. However, Table 1 is an example and it is not limited to the case of Table 1.

**[Table 1]**

| | In-hospital mobile system | Electric cart for elderly people | Caddie cart | Inner surface of container | Footwear | Helmet |
|---|---|---|---|---|---|---|
| Moving speed | 2km per hour or less | 6km per hour or less | 30km per hour or less | Stationary | Walking speed | Stationary |
| Purpose of use | Shock mitigation | Shock mitigation/fluorescent coating | Shock mitigation/fluorescent coating | Corrosion prevention/internal insulation effect | Shock mitigation/fluorescent coating | Shock mitigation/fluorescent coating |
| Base material | Expanded polystyrene /cellulose nanofiber | Expanded polystyrene/cellulose nanofiber | Expanded polystyrene/cellulose nanofiber | Expanded polystyrene | Fibers | Inorganic substance powder highly-oriented thin film sheet (stone paper) |
| Adhesive surface of object | Metal | Metal | Metal | Metal | Fiber | Metal |
| Thickness of polyurea resin layer | 0.2mm or more 0.5mm or less | 0.5mm or more 1mm or less | 1mm or more 1.5mm or less | 0.2mm or more 0.5mm or less | 0.1mm or more 0.2mm or less | 0.2mm or more 0.5mm or less |

When the shock absorber 100 is applied to the mobile devices such as the in-hospital mobile system, the electric cart for elderly people, and the caddie cart, to withstand the impact due to the collision or the like during the movement of the devices, it is desirable to select the base material 20 in which the first base material 21 such as the expanded polystyrene and the second base material 22 such as the cellulose nanofibers are stacked. For the device that moves at a speed of 2 km per hour or less as in the in-hospital mobile system, the thickness of the polyurea resin layer 30 may be 0.2 mm or more and 0.5 mm or less. In the case of the device that moves at a speed of 2 km per hour or more and 10 km per hour or less as in the electric cart for elderly people, the thickness of the polyurea resin layer 30 may be 0.5 mm or more and 0.1 mm or less, and in the case of the device that moves at a speed of 10 km per hour or more and 30 km per hour or less as in the caddie cart, the thickness of the polyurea resin layer 30 may be 1 mm or more and 1.5 mm or less. It is desirable to increase the thickness of the polyurea resin layer 30 as the moving speed increases.

As in the case of attaching the shock absorber 100 to the inner surface of the container, when a main purpose is a corrosion protection and an internal insulation effect rather than a purpose of a shock mitigation, that is when the polyurea resin molding is used as the corrosion prevention material or the heat insulating material, it is desirable to use a single-layered base material of the foamed synthetic resin as the base material 20. For example, expanded polystyrene can be used as the base material 20. When the adhesive surface of the object such as the rear surface of the footwear is a fiber, as the base material 20, it is possible to select fibers such as the carbon fiber, the polyamide synthetic fiber (aramid fiber), the silicate fiber (glass fiber), and the basalt fiber. When the object is the wearable article such as the helmet, the inorganic substance powder highly-blended thin film sheet may be used as the base material 20.

Fig. 3 illustrates one example of the shock absorber 100 according to the second embodiment of the present invention. In the shock absorber 100 of the present example, a cut 24 is also formed to the base material 20. That is, the polyurea resin layer 30 and the base material 20 are divided into a plurality of regions by the cuts 32 and the cuts 24. Note that, the cut 24 may completely penetrate from the front surface to the rear surface of the base material 20 or the cut 24 may be formed from the front surface to a predetermined position in the thickness direction (Z direction) between the front surface and the rear surface of the base material 20. The structure of the shock absorber 100 of the present example is similar to the structure according to the first embodiment of Fig. 1 and Fig. 2 except that the cuts 24 are also formed in the base material 20.

The cut 32 formed to the polyurea resin layer 30 and the cut 24 formed to the base material 20 may have the same position (X-direction position and Y-direction position) as viewed from the upper surface direction (Z direction) of the shock absorber 100. Depending on types of the base material 20, it may be difficult to cut not only the polyurea resin layer 30 but also the base material 20. According to the present example, since the cuts 24 are also formed to the base material 20, a user can cut the shock absorber 100 along the cut 32 and the cut 24 using the instrument such as a cutter. By choosing the cutting points, the shock absorber 100 including the polyurea resin can be cut into the proper size according to the object.

Fig. 4 is an exploded perspective view of the shock absorber 100. As illustrated in Fig. 4, fractured portions 18 may be provided to the adhesive tape portion 10. The fractured portion 18 includes, for example, a plurality of small holes arranged in a line. The adhesive tape portion 10 is easily cut along the fractured portions 18. The cut 32 of the polyurea resin layer 30, the cut 24 of the base material 20, and the fractured portion 18 of the adhesive tape portion 10 may be formed to have the same position (X-direction position and Y-direction position) as viewed from the upper surface direction (Z direction) of the shock absorber 100.

According to the present example, since the shock absorber 100 includes the cut 32 of the polyurea resin layer 30, the cut 24 of the base material 20 and the fractured portion 18 of the adhesive tape portion 10, the entire shock absorber 100 can be easily cut into the proper size according to the object.

The shock absorber 100 according to the above described first and second embodiments can be manufactured as follows. After forming the base material 20 with the foam resin, in a spraying stage, a coating material of the polyurea resin is sprayed on the surface of the base material 20. In the drying stage, the polyurea resin is allowed to dry. Accordingly, the polyurea resin layer 30 is formed on the upper surface of the base material 20. The cuts 32 are formed to the polyurea resin layer 30 by cutting. In the case of the second embodiment, cutting is performed such that the cuts 32 penetrate through the polyurea resin layer 30 to reach the base material 20 and form the cuts 24. Accordingly, a stacked structure of the base material 20 and the polyurea resin layer 30 is completed.

On the other hand, a tape body 12 formed to conform to the shape of the base material 20 is prepared. The fractured portions 18 may be formed to the tape body 12. Next, an adhesive is applied to the upper surface of the tape body 12 to form the second adhesive layer 16. Next, in the stacked structure of the base material 20 and the polyurea resin layer 30, the rear surface of the base material 20 is arranged and joined on/with the second adhesive layer 16. Accordingly, the stacked structure of the base material 20 and the polyurea resin layer 30, and the adhesive tape portion 10 are firmly fixed.

When the fractured portions 18 are formed to the tape body 12, the adhesive tape portion 10 and the stacked structure of the base material 20 and the polyurea resin layer 30 are aligned and then firmly fixed such that the fractured portion 18 and the cut 32 (and cut 24) are in the same position. The first adhesive layer 14 is formed on the rear surface side of the tape body 12. The first adhesive layer 14 provides the adhesive surface.

Instead of forming the cut 32 by cutting, the cut 32 may be formed by masking the portions where the cuts 32 are to be formed such that the cut 32 is not coated with the polyurea resin. Further, instead of forming the cut 24 by cutting, the cut 24 may be formed at the time of molding by the foam resin.

The shock absorber 100 is manufactured in a shape and a component appropriate to a use (application) of the shock absorber 100 (corrosion prevention material or heat insulating material). The shock absorber 100 compatible with the application of the shock absorber 100 may be automatically selected. For example, when a user inputs the application through a terminal, in response to the input application, the type of the base material 20, the thickness of the polyurea resin layer 30, and/or whether to apply the fluorescent coating are determined. A computer or the like connected to a manufacturing apparatus may include a database in which pieces of information on the type of the base material 20, the thickness of the polyurea resin layer 30 and/or whether to apply the fluorescent coating are registered for each application. By referring to the database, the type of the base material 20, the thickness of the polyurea resin layer 30, and/or whether to apply the fluorescent coating may be automatically selected according to the application.

As the application, the specific type of the object may not be input. For example, as the application, information on a moving speed of the object is input. Fig. 5 illustrates one example of the method of manufacturing the shock absorber 100. First, the information on the moving speed of the object is input (step S100). Specifically, the apparatus receives the information on the moving speed of the object in a situation where the object to which the shock absorber 100 is attached is used. Next, a spray amount of the polyurea resin to the surface of the base material 20 is controlled based on the input information such that the thickness of the polyurea resin layer 30 stacked on the base material 20 increases as the moving speed of the object increases (step S200). As the spray amount increases, the thickness of the polyurea resin layer 30 increases. Note that, the base material 20 itself may be controlled to be changed based on the information on the moving speed of the object.

Next, the cut 32 may be formed such that the width and the thickness of the cut 32 increase as the thickness of the polyurea resin layer 30 increases (step S300). For example, a cutting process is controlled such that the width and the thickness of the cut 24 automatically increase as the thickness of the polyurea resin layer 30 increases. Note that, information of whether the object to which the shock absorber 100 is applied is for outdoor use may be input as the application. When it is determined that the object is for outdoor use based on the input information, the fluorescent coating may be applied.

Fig. 6 illustrates one example of the shock absorber 100 in the rolled state. The shock absorber 100 illustrated in Fig. 6 includes a protective film 40 attached to an adhesive surface of the adhesive tape portion 10. The rear surface of the first adhesive layer 14 of the adhesive tape portion 10 may be the adhesive surface. The protective film 40 may be removably attached to the adhesive surface. When the shock absorber 100 is attached to the object for use, the protective film 40 is peeled off. In the present example, the shock absorber 100 is wound in a roll such that the protective film 40 faces inward to form the roll portion 120. However, the present invention is not limited to this case, and the shock absorber 100 may be wound in a roll such that the protective film 40 faces outward.

It is easy to wind the shock absorber 100 in a roll when the cut 24 is also formed to the base material 20 in addition to the cut 32 formed to the polyurea resin layer 30. However, if the base material 20 is a material having flexibility, it is possible to wind the shock absorber 100 in a roll even if the cut 24 is not formed to the base material 20. When the shock absorber 100 is wound in a roll, a user can pull out a necessary size of the shock absorber 100 from the roll portion 120 and cut the pulled out shock absorber 100 into the proper size according to the object for use. However, the shock absorber 100 is not limited to those stored in a roll. The shock absorber 100 may be stored in a folded state.

Although in the above description, the case where the shock absorber 100 extends in the longitudinal direction (X direction) has been described, the present invention is not limited to this case. The shock absorber 100 may be planarly spread along the plane (XY plane). In this case, the cut 32 (and cut 24) may include not only a cut along the Y axis but also a cut along the X axis. That is, the polyurea resin layer 30 (and base material 20) may be divided into a plurality of regions in a grid by first cuts along the X direction and second cuts that intersect with the first cuts.

A user can adjust not only a length in the X direction but also a width in the Y direction of the shock absorber 100. Therefore, a user can separate the planarly spread shock absorber 100 into a proper shape and size according to the object for use.

While the embodiments of the present invention have been described, the technical scope of the invention is not limited to the above described embodiments. A plurality of embodiments can be combined with one another. It is apparent to persons skilled in the art that various alterations and improvements can be added to the above-described embodiments. It is also apparent from the scope of the claims that the embodiments added with such alterations or improvements can be included in the technical scope of the invention.

### EXPLANATION OF REFERENCES

10 adhesive tape, 12 tape body, 14 second adhesive layer, 16 first adhesive layer, 18 fractured portion, 20 base material, 21 first base material, 22 second base material, 24 cut, 30 polyurea resin layer, 32 cut, 40 protective film, 100 shock absorber, 120 roll portion

## Claims

1. A shock absorber comprising:
an adhesive tape portion;
a base material stacked on the adhesive tape portion; and
a polyurea resin layer stacked on the base material, wherein
the polyurea resin layer is divided into a plurality of regions by a cut.

2. The shock absorber according to claim 1, wherein
the polyurea resin layer and the base material are divided into a plurality of regions by the cut.

3. The shock absorber according to claim 2, wherein
the shock absorber comprises a protective film attached to an adhesive surface of the adhesive tape portion so that the shock absorber is wound in a roll.

4. The shock absorber according to any one of claim 1 to claim 3, wherein
the base material include one or more types of base materials selected from a group consisting of a foamed synthetic resin, a carbon fiber, a polyamide synthetic fiber, a silicate fiber, a basalt fiber, an inorganic substance powder highly-blended thin film sheet, and a cellulose nanofiber.

5. The shock absorber according to claim 4, wherein
the base material includes a first base material of a foamed synthetic resin and a second base material stacked on the first base material; and
the second base material includes one or more types of base materials selected from a group consisting of a carbon fiber, a polyamide synthetic fiber, a silicate fiber, a basalt fiber, an inorganic substance powder highly-blended thin film sheet, and a cellulose nanofiber.

6. A corrosion prevention material comprising:
an adhesive tape portion;
a base material stacked on the adhesive tape portion; and
a polyurea resin layer stacked on the base material, wherein
the polyurea resin layer is divided into a plurality of regions by a cut.

7. A heat insulating material comprising:
an adhesive tape portion;
a base material stacked on the adhesive tape portion, and
a polyurea resin layer stacked on the base material; wherein
the polyurea resin layer is divided into a plurality of regions by a cut.

8. A method of manufacturing a shock absorber attached to an object, wherein
the shock absorber includes an adhesive tape portion, a base material stacked on the adhesive tape portion, and a polyurea resin layer stacked on the base material, and the polyurea resin layer is divided into a plurality of regions by a cut,
the method comprising:
inputting information on a moving speed of the object in a situation where the object to which the shock absorber is attached is used;
controlling a spray amount of a polyurea resin to a surface of the base material based on the information that is input such that a thickness of the polyurea resin layer stacked on the base material increases as the moving speed of the object increases; and
forming such that a width and a thickness of the cut increase as the thickness of the polyurea resin layer increases.

## Amended claims

### Amended claims under Art. 19.1 PCT

1. A shock absorber comprising:
an adhesive tape portion;
a base material stacked on the adhesive tape portion; and
a polyurea resin layer stacked on the base material, wherein
the polyurea resin layer is divided into a plurality of regions by a cut.

2. (amended) The shock absorber according to claim 1, wherein
the base material includes a foamed synthetic resin stacked on the adhesive tape portion; and
the polyurea resin layer is stacked on the foamed synthetic resin.

3. (amended) The shock absorber according to claim 1 or 2, wherein
the polyurea resin layer and the base material are divided into a plurality of regions by the cut.

4. (amended) The shock absorber according to claim 3, wherein
the shock absorber comprises a protective film attached to an adhesive surface of the adhesive tape portion so that the shock absorber is wound in a roll.

5. (amended) The shock absorber according to claim 1, wherein
the base material include one or more types of base materials selected from a group consisting of a foamed synthetic resin, a carbon fiber, a polyamide synthetic fiber, a silicate fiber, a basalt fiber, an inorganic substance powder highly-blended thin film sheet, and a cellulose nanofiber.

6. (amended) The shock absorber according to claim 2, wherein
the base material includes a first base material of the foamed synthetic resin and a second base material stacked on the first base material; and
the second base material includes one or more types of base materials selected from a group consisting of a carbon fiber, a polyamide synthetic fiber, a silicate fiber, a basalt fiber, an inorganic substance powder highly-blended thin film sheet, and a cellulose nanofiber.

7. (amended) A corrosion prevention material comprising:
an adhesive tape portion;
a base material stacked on the adhesive tape portion; and
a polyurea resin layer stacked on the base material, wherein
the polyurea resin layer is divided into a plurality of regions by a cut.

8. (amended) A heat insulating material comprising:
an adhesive tape portion;
a base material stacked on the adhesive tape portion, and
a polyurea resin layer stacked on the base material; wherein
the polyurea resin layer is divided into a plurality of regions by a cut.

9. (added) The heat insulating material according to claim 8, wherein
the base material includes a foamed synthetic resin stacked on the adhesive tape portion; and
the polyurea resin layer is stacked on the foamed synthetic resin.

10. (added) A method of manufacturing a shock absorber attached to an object, wherein
the shock absorber includes an adhesive tape portion, a base material stacked on the adhesive tape portion, and a polyurea resin layer stacked on the base material, and the polyurea resin layer is divided into a plurality of regions by a cut,
the method comprising:
inputting information on a moving speed of the object in a situation where the object to which the shock absorber is attached is used; and
controlling a spray amount of a polyurea resin to a surface of the base material based on the information that is input such that a thickness of the polyurea resin layer stacked on the base material increases as the moving speed of the object increases.

11. (added) The method of manufacturing the shock absorber according to claim 10, the method comprising:
forming such that a width and a thickness of the cut increase as the thickness of the polyurea resin layer increases.
